# EUROPÄISCHE PATENTANMELDUNG

(11) **EP 1 617 371 A2**
(43) Veröffentlichungstag der Anmeldung: **18.01.2006**
(21) Anmeldenummer: 05015185.1
(22) Anmeldetag: 13.07.2005
(51) Int. Cl.: G06T 5/00

(54) **Verfahren zur Kennzeichnung von Bildinformationen in der Darstellung eines mit einer fahrzeugseitigen Bildaufnahmeeinrichtung aufgenommenen Nachtsichtbildes und zugehöriges Nachtsichtsystem**

(30) Priorität: 16.07.2004 DE 102004034532
(71) Anmelder: AUDI AG, 85045 Ingolstadt (DE)
(72) Erfinder: Riedel, Helmut, 86697 Oberhausen (DE); Taner, Anil, 85057 Ingolstadt (DE)
(74) Vertreter: Thielmann, Frank

(57) **Zusammenfassung**

Verfahren zur Kennzeichnung von Bildinformationen in der Darstellung eines mit einer fahrzeugseitigen Bildaufnahmeeinrichtung aufgenommen Nachtsichtbildes der Umgebung eines Kraftfahrzeugs mittels einer fahrzeugseitigen Bildausgabeeinrichtung, umfassend die Schritte
- Durchführung einer Analyse der Bilddaten des Nachtsichtbildes in Abhängigkeit wenigstens eines Analyseparameters zur Ermittlung wenigstens einer relevanten Bildinformation und
- optische Hervorhebung der wenigstens einen ermittelten relevanten Bildinformation des Nachtsichtbildes in der Darstellung der Bildausgabeeinrichtung.

## Beschreibung

Die Erfindung betrifft ein Verfahren zur Kennzeichnung von Bildinformationen in der Darstellung eines mit einer fahrzeugseitigen Bildaufnahmeeinrichtung aufgenommenen Nachtsichtbildes der Umgebung eines Kraftfahrzeugs mittels einer fahrzeugseitigen Bildausgabeeinrichtung und ein zugehöriges Nachtsichtsystem.

In jüngerer Zeit hält die Verwendung von Nachtsichtgeräten mehr und mehr Einzug im Kraftfahrzeugbereich. Das Ziel ist dabei, eine höhere Sicherheit zu erreichen, wenn das Fernlicht nicht nutzbar ist oder eine Situation gegeben ist, bei der allgemein eine höhere Sichtweite die Unfallgefahr reduzieren kann.

Bei Nahinfrarotsystemen wird das Vorfeld des Fahrzeugs mit Hilfe einer für das menschliche Auge unsichtbaren Infrarotbeleuchtung ausgeleuchtet und dann das reflektierte Infrarotlicht mit Hilfe einer Kamera, die im entsprechenden Spektralbereich empfindlich ist, aufgenommen. Das einem Schwarz-Weiß-Bild der Umgebung ähnelnde Bild wird auf einem vom Fahrer einsehbaren Display dargestellt. Bei einem Ferninfrarotsystem wird mit Hilfe einer Wärmebildkamera die Wärmestrahlung von Objekten in der Umgebung des Fahrzeugs aufgenommen. Das entstehende Schwarz-Weiß-Abbild der Wärmeverteilung der Umgebung, das wiederum auf einem Display dargestellt wird, kann entfremdet wirken. Die Ableitung von Informationen aus den Infrarotbildern erfordert seitens des Fahrers eine beträchtliche Erkennungsleistung.

Um die in den Infrarotbildern dargestellten zusätzlichen Informationen tatsächlich nutzen zu können, ist eine kontinuierliche Bildbetrachtung erforderlich. Dadurch entstehen jedoch Probleme, da die Bilddarstellung nicht alle Informationen liefern kann, die nötig sind, um das Fahrzeug sicher zu lenken. Deshalb ist der Fahrer gezwungen, ständig den Blick zwischen Straße und Display zu wechseln. Diese Blickwechsel sind nicht nur ermüdend und anstrengend, sondern es besteht auch die Gefahr, dass wieder Informationen verloren gehen.

Andererseits gibt es Bestrebungen, dem Fahrer die Objekterkennung völlig abzunehmen und nur noch anzuzeigen, dass eine Gefahr besteht. Hierbei besteht jedoch das Problem, dass die bisher bekannten Verfahren der Objekterkennung mit einem hohen Rechenaufwand verbunden sind. Die Leistungsfähigkeit derzeitiger Methoden zur Objekterkennung kann außerdem durch Blooming- und Sättigungseffekte der Kamera sowie durch geringere Reflektivität der Objekte bei Nahinfrarotbildern und durch die Abhängigkeit der Bildkontraste von der Außentemperatur und der Wärmeisolation einzelner Objekte bei Ferninfrarotbildern beeinträchtigt werden.

Der Erfindung liegt damit die Aufgabe zugrunde, ein Verfahren der eingangs genannten Art und ein zugehöriges Nachtsichtsystem anzugeben, das zum einen zuverlässig ist und zum anderen ein einfaches Extrahieren der relevanten Informationen seitens des Fahrers erlaubt.

Zur Lösung dieser Aufgabe umfasst das erfindungsgemäße Verfahren zur Kennzeichnung von Bildinformationen in der Darstellung eines mit einer fahrzeugseitigen Bildaufnahmeeinrichtung aufgenommenen Nachtsichtbildes der Umgebung eines Kraftfahrzeugs mittels einer fahrzeugseitigen Bildausgabeeinrichtung die folgenden Schritte:
- Durchführung einer Analyse der Bilddaten des Nachtsichtbildes in Abhängigkeit wenigstens eines Analyseparameters zur Ermittlung wenigstens einer relevanten Bildinformation und
- optische Hervorhebung der wenigstens einen ermittelten relevanten Bildinformation des Nachtsichtbildes in der Darstellung der Bildausgabeeinrichtung.

Es werden zunächst die Bilddaten des Nachtsichtbildes in Abhängigkeit wenigstens eines Analyseparameters analysiert. Die im Rahmen der Analyse ermittelten relevanten Bildinformationen werden schließlich mittels der Bildausgabeeinrichtung optisch hervorgehoben dargestellt. Die Bildausgabeeinrichtung kann z.B. ein Head-Up-Display, eine Bildprojektionseinrichtung oder ein Flüssigkristall-Display sein. Bei einem Head-Up-Display wird das Bild in das Sichtfeld des Fahrers projiziert, bei Bildprojektionseinrichtungen kann z.B. eine Umlenkung der Strahlung über gewölbte Spiegel stattfinden, so dass der Fahrer das Bild in einer bestimmten Entfernung im Fahrzeugvorfeld sieht. Diese beiden Systeme haben den Vorteil, dass das Abwenden des Blickes von der Straße vermieden werden kann und die Zahl der Blickwechsel minimiert wird. Zudem muss das Auge sich nicht ständig akkommodieren. Die Verwendung eines Flüssigkristall-Displays bietet dagegen den Vorteil, dass ein solches Display bereits heute vielfach verwendet wird, beispielsweise im Zusammenhang mit Navigationssystemen, so dass auf ein ohnehin eingebautes Display zurückgegriffen werden kann.

Der Fahrer sieht somit noch ein Bild, muss also eine Erkennungsarbeit leisten, die aber durch das Hervorheben der für ihn relevanten Bildinformationen im Unterschied zum Bildhintergrund deutlich vereinfacht ist. Grundlage der Analyse ist dabei einzig das Nachtsichtbild, das in der Regel ein lnfrärotbild sein wird, wobei aber auch die Verwendung anderer Techniken wie z.B. Ultraschall möglich ist; visuelle Daten oder Farbdaten sind demgegenüber nicht erforderlich.

Das Nachtsichtbild kann mittels wenigstens einer Infrarot-Kamera aufgenommen werden, die Teil eines fahrzeugseitigen Ferninfrarot- oder Nahinfrarot-Systems ist. Da für das erfindungsgemäße Verfahren keine visuellen Abbilder erforderlich sind, ist im einfachsten Fall eine einzige Infrarot-Kamera ausreichend. Das erfindungsgemäße Verfahren ist besonders zur Verwendung mit einem Ferninfrarot-System geeignet, das die natürliche Wärmestrahlung der Umgebung nutzt. Auch eine Verwendung mit einem Nahinfrarot-System ist möglich, wobei jedoch Nahinfrarot-Bilder eine höhere Detailgenauigkeit aufweisen, so dass eine deutlich größere Anzahl von Bildinformationen detektiert wird, so dass zusätzlich eine Objekterkennung erforderlich ist. Dadurch ergibt sich ein höherer Rechenaufwand und es kann sinnvoll sein, zusätzliche Verarbeitungsschritte für das Bild durchzuführen, damit das dem Fahrer schließlich dargestellte Bild nicht durch eine zu hohe Informationsdichte überfrachtet wirkt.

Erfindungsgemäß ist vorgesehen, dass als relevante Bildinformationen bewegte und/oder unbewegte Objekte und/oder Kanten, insbesondere Fahrbahnränder und/oder Fahrspurmarkierungen, ermittelt werden. Kanten können beispielsweise mit Hilfe von Filtern zur Kantendetektion detektiert werden. Damit ist eine Bestimmung des Fahrbahnverlaufs und/oder der Fahrbahnränder möglich. Kantendetektion kann z.B. unter Ermittlung von Diskontinuitäten der Intensitätsverteilung des Bildes erfolgen, woraufhin dann die Krümmungen der detektierten Kanten analysiert werden können. So können der Straßenverlauf und die Straßenränder extrahiert werden.

Eine Ausgestaltung der Erfindung sieht vor, dass als ein Analyseparameter ein dynamisch anpassbarer und/oder fahrerseitig einstellbarer Schwellwert, insbesondere der Intensität und/oder des Kontrasts und/oder der Nachbarschaftsbeziehungen bestimmter Pixelregionen der Bilddaten, verwendet wird.

Es wird also beispielsweise die über der Intensität, entsprechend der subjektiv empfundenen Helligkeit, aufgetragene Häufigkeit der Bildpunkte betrachtet, die diskretisiert als Histogramm vorliegen kann. Die diskrete oder kontinuierliche Auftragung der Pixelanzahl in Abhängigkeit von Intensität beziehungsweise Helligkeit weist dabei in der Regel eine Reihe von Maxima oder Peaks auf. Häufig wird ein einzelnes globales Maximum erkennbar sein, das dem Bildhintergrund zugeordnet werden kann. In Abhängigkeit der bestimmten Intensitätsverteilung der Bildpunkte kann der Fahrer beispielsweise einen Intensitätswert festlegen, der als Schwellwert den in der Analyse zu berücksichtigenden Intensitätsbereich angibt. Eine dynamische Anpassung des Schwellwerts erlaubt es, bei ganz unterschiedlichen Bildverhältnissen und entsprechend unterschiedlichen Intensitätsverteilungen dennoch eine gute Abgrenzung von Objekten und anderen relevanten Bildinformationen gegenüber dem Bildhintergrund zu gewährleisten. Alternativ zur Histogrammauswertung können z.B. Ansätze verwendet werden, die relevante Bildinformationen durch die Analyse von Nachbarschaftsbeziehungen in einzelnen Pixelregionen der Bilddaten ermitteln.

Es ist vorteilhaft, wenn die ermittelte Bildinformation klassifiziert und/oder zur optischen Hervorhebung in der Darstellung der Bildausgabeeinrichtung aufgehellt und/oder eingefärbt dargestellt wird. Eine grobe Klassifizierung der detektierten Objekte oder Kanten kann beispielsweise mit Hilfe einer gespeicherten Datenbank durchgeführt werden, die Informationen über typische Formen und Größen von Bildinformationen umfasst, oder es können Bewegungen aus dem Vergleich direkt aufeinander folgender Bilder hergeleitet werden. Die Klassifizierung ermöglicht eine priorisierte Darstellung bestimmter Bildinformationen, so dass die Gesamtzahl der hervorgehobenen Objekte bzw. Kanten verringert werden kann und Fehlwarnungen vermieden werden.

Durch die optische Hervorhebung der relevanten Bildinformationen kann sich der Fahrer beim Blick auf die Bildausgabeeinrichtung, z.B. das Display, schneller orientieren und mögliche Gefahren schnell und besser erkennen. Durch eine Aufhellung der Bildpunkte eines Objektes wird der Blick des Fahrers gezielt auf das Display gelenkt, wenn dieses Objekt plötzlich auftritt, da besonders helle und/oder auffällige Objekte reflexartig mit den Augen fixiert werden. Die Aufhellung oder die Einfärbung mit auffälligen Farben, die z.B. Warnfunktionen erfüllen können, erlauben eine Verwendung des fahrzeugseitigen Systems derart, dass der Blick nur dann auf das Display gerichtet wird, wenn ein derart hervorgehobenes Objekt auf dem Display angezeigt wird.

Dabei ist es vorteilhaft, wenn der Fahrbahnverlauf und/oder die Fahrbahnränder auf dem Display aufgehellt und/oder eingefärbt dargestellt werden. Sind Straßenverlauf und -rand in der Displaydarstellung mit einem Blick zu erkennen, so ermöglicht dies dem Fahrer eine einfache Orientierung dahingehend, ob Objekte eine mögliche Gefahr darstellen. Eine hinreichende Orientierungsmöglichkeit ist dadurch gegeben, dass lediglich die Fahrbahnränder hervorgehoben werden, z.B. durch eine Aufhellung. Bevorzugterweise werden jedoch die Fahrbahnbegrenzungen eingefärbt, wobei eine andere Farbe als für die relevanten Objekte verwendet wird, so dass der Fahrer die Fahrbahn leicht von den wichtigen Objekten unterscheiden kann.

Die nicht relevanten Bildinformationen können erfindungsgemäß schwarzweiß, monochrom oder mit Falschfarben dargestellt werden. Die Schwarz-Weiß-Darstellung entspricht dabei der ursprünglichen Darstellung ohne eine weitere Bildbearbeitung. Eine monochrome Darstellung oder eine Darstellung mit Falschfarben kann demgegenüber einen verbesserten Kontrast bewirken, so dass die Extraktion der Informationen für den Fahrer weiter erleichtert wird.

Weiterhin ist es möglich, dass die Farbgestaltung und/oder Helligkeit der Darstellung der Bildausgabeeinrichtung an die Umgebungsbedingungen, insbesondere die Umgebungshelligkeit und/oder die Außentemperatur und/oder den Luftdruck und/oder die Luftfeuchtigkeit, angepasst werden. Zur Bestimmung dieser Umgebungsbedingungen können teilweise schon fahrzeugseitig vorhandene Sensoren, wie beispielsweise ein Lichtsensor, ein Temperaturfühler und ein Barometer verwendet werden. Dadurch kann berücksichtigt werden, dass z.B. die Empfindlichkeit des menschlichen Auges von den Umgebungsbedingungen abhängt, so dass jeweils andere Farbgestaltungen als angenehm empfunden werden. Der Fahrer muss sich beim Wechsel des Blicks zwischen Fahrbahn beziehungsweise Umgebung und Bildausgabeeinrichtung nicht ständig umstellen, wenn die Farbgestaltung von vornherein an die Umgebung angepasst ist. Darüber hinaus bleibt so gewährleistet, dass das reflexartige Erkennen von neu auftauchenden Objekten und anderen relevanten Bildinformationen auch bei stark geänderten Umgebungsbedingungen noch funktioniert, da in diesem Fall die Aufhellung und Einfärbung entsprechend angepasst sind.

Außerdem ist es vorteilhaft, wenn die Art der Hervorhebung und/oder die zur Hervorhebung verwendete Farbgebung fahrerseitig ausgewählt werden. Damit ist es dem Fahrer möglich, die Darstellung an seine persönlichen Sehgewohnheiten und -vorlieben anzupassen, je nachdem, welche Art der Hervorhebung oder Farbgebung er als angenehm empfindet oder besonders geeignet, seine Aufmerksamkeit auf sich zu ziehen.

Daneben betrifft die Erfindung ein Nachtsichtsystem für ein Kraftfahrzeug, umfassend wenigstens eine fahrzeugseitig vorhandene Bildaufnahmeeinrichtung, eine Datenverarbeitungseinheit, insbesondere einen Mikroprozessor, und eine Bildausgabeeinrichtung, das dadurch gekennzeichnet ist, dass die Datenverarbeitungseinheit zur Ermittlung wenigstens einer relevanten Bildinformation mittels einer Analyse der Bilddaten eines mit der Bildaufnahmeeinrichtung aufgenommenen Nachtsichtbildes in Abhängigkeit wenigstens eines Analyseparameters und außerdem zur Darstellung des Nachtsichtbildes mittels der Bildausgabeeinrichtung derart ausgebildet ist, dass eine optische Hervorhebung der wenigstens einen ermittelten relevanten Bildinformation erfolgt.

Durch die Verwendung von mehr als einer Bildaufnahmeeinrichtung ist es möglich, detailliertere Bilder zu erhalten und zudem die Detektion relevanter Bildinformationen sicherer zu gestalten. Verfügt die Datenverarbeitungseinheit über zusätzliche Speicherkapazitäten, so kann auf gespeicherte Daten beispielsweise zur Objektklassifizierung zurückgegriffen werden. Die Rechenleistung der Datenverarbeitungseinheit muss so gewählt werden, dass die Detektion relevanter Bildinformationen schnell genug erfolgt, damit der Fahrer noch genügend Zeit hat, um auf mögliche Gefahren zu reagieren, nachdem er diese in der Darstellung der Bildausgabeeinrichtung erkannt hat.

Eine Ausgestaltung des erfindungsgemäßen Nachtsichtsystems sieht vor, dass die Datenverarbeitungseinheit zur Ermittlung einer relevanten Bildinformation in Form bewegter und/oder unbewegter Objekte und/oder Kanten, insbesondere in Form von Fahrbahnrändern und/oder Fahrspurmarkierungen, ausgebildet ist.

Außerdem kann die Datenverarbeitungseinheit zur Verwendung eines dynamisch anpassbaren und/oder fahrerseitig einstellbaren Schwellwerts, insbesondere der Intensität und/oder des Kontrasts und/oder der Nachbarschaftsbeziehungen bestimmter Pixelregionen der Bilddaten, als Analyseparameter ausgebildet sein.

Es ist vorteilhaft, wenn die Datenverarbeitungseinheit zur Klassifikation der ermittelten relevanten Bildinformationen und/oder zur Darstellung mittels der Bildausgabeeinrichtung derart ausgebildet ist, dass die ermittelten relevanten Bildinformationen zur optischen Hervorhebung aufhellbar und/oder einfärbbar sind.

Zweckmäßigerweise ist die Datenverarbeitungseinheit zur Darstellung des Nachtsichtbildes mittels der Bildausgabeeinrichtung derart ausgebildet, dass nicht hervorzuhebende, also nicht relevante Bildinformationen schwarzweiß, monochrom oder mit Falschfarben darstellbar sind. Dadurch vereinfacht sich die seitens des Fahrers zu erbringende Erkennungsleistung.

Weiterhin ist es vorteilhaft, wenn die Datenverarbeitungseinheit zur Darstellung des Nachtsichtbildes mittels der Bildausgabeeinrichtung derart ausgebildet ist, dass die Farbgestaltung und/oder Helligkeit der Darstellung an die Umgebungsbedingungen, insbesondere die Umgebungshelligkeit und/oder die Außentemperatur und/oder den Luftdruck und/oder die Luftfeuchtigkeit, anpassbar sind. Außerdem kann die Datenverarbeitungseinheit zur Darstellung des Nachtsichtbildes in Abhängigkeit von einer fahrerseitig ausgewählten Art und/oder Farbgebung der Hervorhebung ausgebildet sein.

Die Bildaufnahmeeinrichtung des Nachtsichtsystems kann wenigstens eine Infrarot-Kamera umfassen, die Teil eines fahrzeugseitigen Ferninfrarot- oder Nahinfrarot-Systems sein; die Bildausgabeeinrichtung ist beispielsweise ein Head-Up-Display, eine Bildprojektionseinrichtung oder ein Flüssigkristall-Display.

Weitere Vorteile, Merkmale und Einzelheiten der Erfindung ergeben sich aus den im Folgenden dargestellten Ausführungsbeispielen sowie anhand der Abbildungen. Dabei zeigen:
- Fig. 1: eine Prinzipdarstellung zur Durchführung des erfindungsgemäßen Verfahrens;
- Fig. 2: eine vereinfachte Darstellung von Bilddaten in Form einer möglichen Intensitätsverteilung von Bildpunkten; und
- Fig. 3: eine Skizze eines Kraftfahrzeugs mit einem erfindungsgemäßen Nachtsichtsystem.

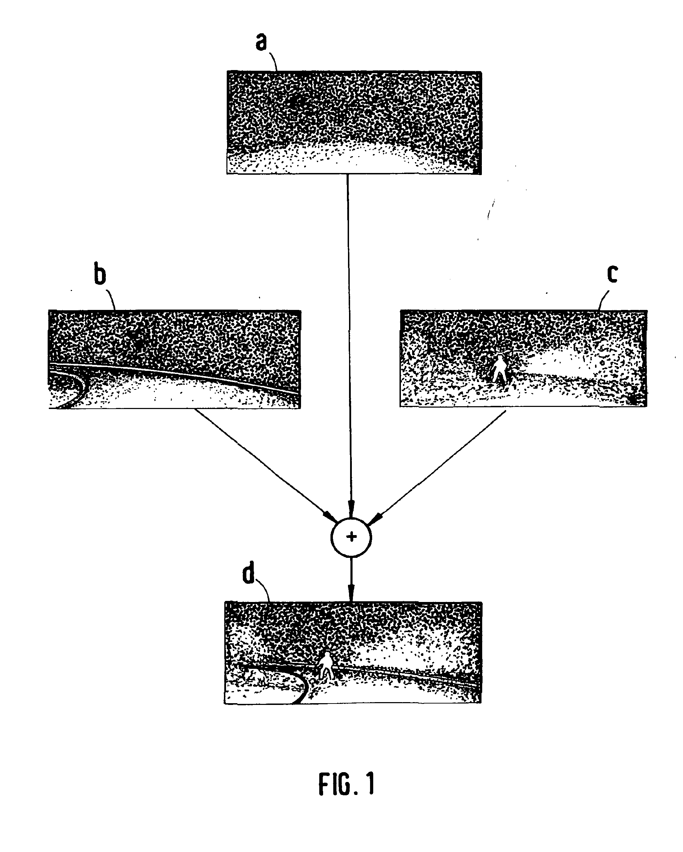

In Fig. 1 ist eine Prinzipdarstellung zur Durchführung des erfindungsgemäßen Verfahrens gezeigt. Zunächst wird mit einer Infrarot-Kamera oder einem anderen Nachtsichtgerät im Schritt a ein Bild aufgenommen, auf dem, wie bei lnfrarotbildern üblich, eine Schwarz-Weiß-Abbildung der Umgebung beziehungsweise der Wärmeverteilung der Umgebung zu sehen ist. Das Bild wirkt entfremdet, und es ist seitens des Fahrers eine erhebliche Erkennungsarbeit erforderlich, um den Fahrbahnverlauf oder die Position von Objekten zu bestimmen. Nach der Aufnahme des Nachtsichtbildes werden idealer Weise parallel die Schritte b und c durchgeführt. Im Schritt b wird das Nachtsichtbild mit Hilfe von Filtern zur Kantendetektion bearbeitet, so dass der Fahrbahnverlauf und der Fahrbahnrand bestimmt werden können. Für die Darstellung mit der Bildausgabeeinrichtung ist es dabei zweckmäßig, die Fahrbahnränder aufzuhellen oder einzufärben, damit eine schnelle Orientierung des Fahrers möglich ist, ohne dass Objekte überdeckt werden. Die Darstellung zeigt das Nachtsichtbild der Infrarot-Kamera, nachdem die detektierten Fahrbahnränder eingefärbt worden sind.

Für den Schritt c erfolgt hier zunächst eine Aufgliederung der Bilddaten in Anzahlen der Bildpunkte, die jeweils gleiche Intensitäten oder Helligkeiten aufweisen. Die Intensitätsverteilung der Bildpunkte wird z.B. als ein Histogramm aufgetragen, das anschließend analysiert wird. Bei der Analyse wird eine dynamisch wählbare Schwelle der Intensität zugrunde gelegt, die mit der jeweiligen Intensitätsverteilung variieren kann und dazu dient, die Maxima der Bildpunkthäufigkeit, die zu relevanten Bildinformationen gehören, vom zum Bildhintergrund gehörigen Maximum, das in der Regel ein globales Maximum sein wird, abzugrenzen. Eine sinnvolle Wahl der Lage der Schwelle ist wie hier dargestellt beispielsweise dann gegeben, wenn der der Schwelle zugeordnete Intensitätswert größer als der des globalen Maximums ist, aber kleiner als die den Objektpeaks zugeordneten Intensitätswerte. Selbstverständlich können Bildinformationen auch auf Basis anderer Ansätze gewonnen werden, beispielsweise durch die Auswertung von Nachbarschaftsbeziehungen in bestimmten Bildpunktregionen des Nachtsichtbildes.

Die im Rahmen dieser Analyse ermittelten relevanten Bildinformationen werden, wie hier dargestellt, aufgehellt oder eingefärbt, so dass sie schnell erkannt werden können. Im dargestellten Fall kann so ein Mensch, der sich hier auf der Fahrbahn befindet, umgehend als Gefahr erkannt werden, so dass die Fahrweise entsprechend angepasst werden kann, während im Originalbild der Kamera dieses Erkennen nur sehr schwer möglich ist. Auf Basis des Originalbildes werden schließlich die in den Schritten b und c erhaltenen, bearbeiteten Bilder fusioniert, so dass auf dem Display ein Bild sichtbar ist, in dem die Fahrbahnkanten aufgehellt beziehungsweise eingefärbt und die relevanten Bildinformationen hervorgehoben sind. So kann der Fahrer mit einem Blick erkennen, dass sich in diesem Fall eine Person im Fahrbahnbereich befindet, so dass der Fahrer gleich weiß, dass eine Gefahr besteht und er reagieren sollte, indem er zum Beispiel die Geschwindigkeit verringert. Die vom Fahrer zu erbringende Erkennungsleistung ist gegenüber herkömmlichen Darstellungen deutlich verringert, während gleichzeitig wichtige Objekte und dergleichen, wie Personen oder Tiere, zuverlässig detektiert und hervorgehoben sind.

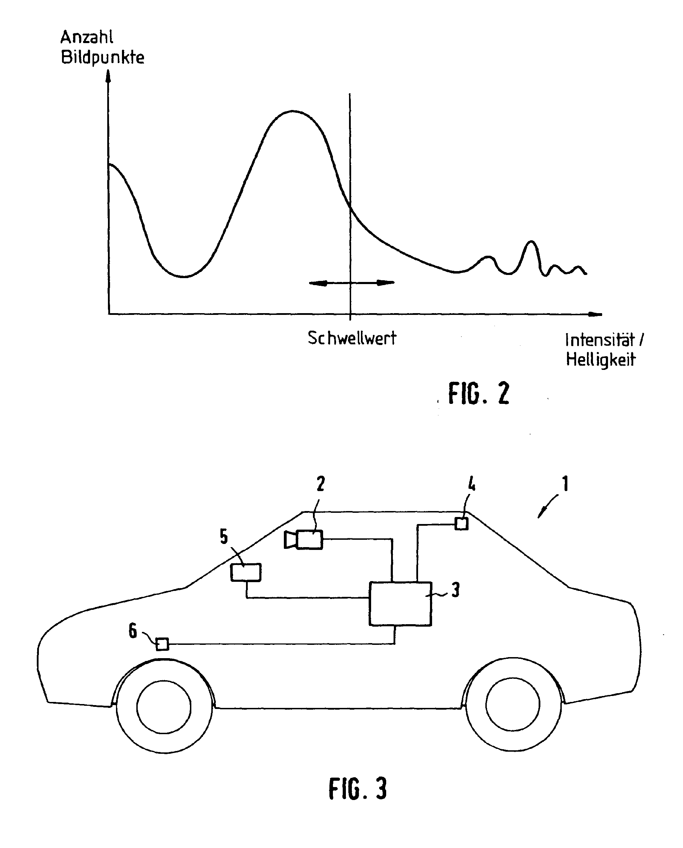

In Fig. 2 ist zur Erläuterung des Verfahrens eine vereinfachte Darstellung von Bilddaten in Form einer möglichen Intensitätsverteilung von Bildpunkten angegeben. Aufgetragen ist jeweils die Anzahl der Bildpunkte gegenüber der Intensität beziehungsweise Helligkeit. Im gezeigten Fall gibt es ein globales Maximum der Anzahl der Bildpunkte, das dem Bildhintergrund zugeordnet werden kann. Daneben treten im Bereich höherer Intensitäten eine Reihe lokaler Maxima unterschiedlicher Stärke auf. Diese lokalen Maxima können bestimmten Bildinformationen im Bild zugeordnet werden. Zur Durchführung der Analyse wird nun dynamisch je nach Intensitätsverteilung ein Schwellwert angegeben, dessen dynamische Anpassung hier durch einen Doppelpfeil dargestellt ist. Dieser Schwellwert ist maßgeblich für die durchzuführende Analyse, wobei er so zu wählen ist, dass die dem lokalen Maxima zugeordneten Bildinformationen deutlich identifiziert werden können. Bei der Anpassung des Schwellwerts kann neben der tatsächlichen Intensitätsverteilung der Bildpunkte auch die Umgebung berücksichtigt werden, beispielsweise Tageszeit oder Temperatur.

Fig. 3 zeigt eine Skizze eines Kraftfahrzeugs 1 mit einem erfindungsgemäßen Nachtsichtsystem. Das Kraftfahrzeug 1 verfügt über eine Bildaufnahmeeinrichtung 2, die ein Nachtsichtbild der Umgebung im Vorfeld des Kraftfahrzeugs aufnimmt. Das aufgenommene Bild der Bildaufnahmeeinrichtung 2 wird in einer Datenverarbeitungseinheit 3 in Abhängigkeit wenigstens eines Analyseparameters, z.B. hinsichtlich der Intensitätsverteilung der Bildpunkte, analysiert, wobei ein fahrerseitig bestimmter Schwellwert verwendet wird. Darüber hinaus ist die Datenverarbeitungseinheit 3 zur Bildbearbeitung mit Hilfe von Filtern zur Kantendetektion ausgebildet, so dass z.B. die Fahrbahnränder detektiert werden und in der Darstellung hervorgehoben werden können. Außerdem verfügt die Datenverarbeitungseinheit 3 über eine Speichereinrichtung, in der Daten zur Klassifizierung von detektierten Objekten abgelegt sind.

Daneben erhält die Datenverarbeitungseinheit 3 Daten von Sensoren 4, die die Umgebungsbedingungen wie die Umgebungshelligkeit oder Temperatur und dergleichen betreffen. Die Hervorhebung beziehungsweise Einfärbung der detektierten relevanten Objekte oder des Fahrbahnrandes wird dann entsprechend den Umgebungsdaten angepasst. Nachdem die Datenverarbeitungseinheit 3 die Analyse durchgeführt hat, wird schließlich das bearbeitete Bild auf einer Bildausgabeeinrichtung 5 dargestellt. In diesem Bild sind nun die relevanten Bildschirminformationen hervorgehoben, beispielsweise eingefärbt oder aufgehellt, so dass sie leicht erkannt werden können. Darüber hinaus wird dem Fahrer die Orientierung durch einen eingefärbten Fahrbahnrand erleichtert.

Außerdem ist eine Eingabevorrichtung 6 vorgesehen, die es dem Fahrer ermöglicht, die Art der Hervorhebung und die zur Hervorhebung verwendete Farbgebung selbst auszuwählen, um sie an seine Sehgewohnheiten anzupassen. Damit ist es dem Fahrer möglich, individuell Farben auszuwählen, die er als besonders warnend empfindet, oder andererseits sich auf eine Aufhellung zu beschränken. Die Eingabevorrichtung 6 kann alternativ in die Bildausgabeeinrichtung 5 integriert sein, beispielsweise bei einem Display, das ohnehin schon für ein Navigationssystem verwendet wird. Die oft in eine Bildausgabeeinrichtung 5 integrierten Lautsprecher können dazu genutzt werden, um in Ergänzung zum Bild einen Warnton auszugeben, wenn sich z.B. ein schnell bewegendes Objekt auf der Fahrbahn befindet oder eine andere größere Gefahr erkannt wurde. Alternativ zu der hier dargestellten Bildausgabeeinrichtung 5, die als Flüssigkristalldisplay ausgebildet ist, können ein Head-Up-Display oder eine Bildprojektionseinrichtung verwendet werden, bei denen der Fahrer zur Bildbetrachtung seinen Blick nicht von der Fahrbahn abwenden muss und zudem eine geringere Akkomodationsleistung erbracht werden muss.

## Patentansprüche

1. Verfahren zur Kennzeichnung von Bildinformationen in der Darstellung eines mit einer fahrzeugseitigen Bildaufnahmeeinrichtung aufgenommen Nachtsichtbildes der Umgebung eines Kraftfahrzeugs mittels einer fahrzeugseitigen Bildausgabeeinrichtung,
umfassend die Schritte
- Durchführung einer Analyse der Bilddaten des Nachtsichtbildes in Abhängigkeit wenigstens eines Analyseparameters zur Ermittlung wenigstens einer relevanten Bildinformation und
- optische Hervorhebung der wenigstens einen ermittelten relevanten Bildinformation des Nachtsichtbildes in der Darstellung der Bildausgabeeinrichtung.

2. Verfahren nach Anspruch 1,
**dadurch gekennzeichnet,**
**dass** als relevante Bildinformationen bewegte und/oder unbewegte Objekte und/oder Kanten, insbesondere Fahrbahnränder und/oder Fahrspurmarkierungen, ermittelt werden.

3. Verfahren nach einem der Ansprüche 1 oder 2,
**dadurch gekennzeichnet,**
**dass** als ein Analyseparameter ein dynamisch anpassbarer und/oder fahrerseitig einstellbarer Schwellwert, insbesondere der Intensität und/oder des Kontrasts und/oder der Nachbarschaftsbeziehungen bestimmter Pixelregionen der Bilddaten, verwendet wird.

4. Verfahren nach einem der vorangehenden Ansprüche,
**dadurch gekennzeichnet,**
**dass** die ermittelte relevante Bildinformation klassifiziert und/oder zur optischen Hervorhebung in der Darstellung der Bildausgabeeinrichtung aufgehellt und/oder eingefärbt dargestellt wird.

5. Verfahren nach einem der vorangehenden Ansprüche,
**dadurch gekennzeichnet,**
**dass** nicht relevante Bildinformationen schwarzweiß, monochrom oder mit Falschfarben dargestellt werden.

6. Verfahren nach einem der vorangehenden Ansprüche,
**dadurch gekennzeichnet,**
**dass** die Farbgestaltung und/oder Helligkeit der Darstellung der Bildausgabeeinrichtung an die Umgebungsbedingungen, insbesondere die Umgebungshelligkeit und/oder die Außentemperatur und/oder den Luftdruck und/oder die Luftfeuchtigkeit, angepasst werden.

7. Verfahren nach einem der vorangehenden Ansprüche,
**dadurch gekennzeichnet,**
**dass** die Art der Hervorhebung und/oder die zur Hervorhebung verwendete Farbgebung fahrerseitig ausgewählt werden.

8. Nachtsichtsystem für ein Kraftfahrzeug, umfassend wenigstens eine fahrzeugseitig vorhandene Bildaufnahmeeinrichtung (2), eine Datenverarbeitungseinheit (3), insbesondere einen Mikroprozessor, und eine Bildausgabeeinrichtung (5),
**dadurch gekennzeichnet,**
**dass** die Datenverarbeitungseinheit (3) zur Ermittlung wenigstens einer relevanten Bildinformation mittels einer Analyse der Bilddaten eines mit der Bildaufnahmeeinrichtung (2) aufgenommenen Nachtsichtbildes in Abhängigkeit wenigstens eines Analyseparameters und außerdem zur Darstellung des Nachtsichtbildes mittels der Bildausgabeeinrichtung (5) derart ausgebildet ist, dass eine optische Hervorhebung der wenigstens einen ermittelten relevanten Bildinformation erfolgt.

9. Nachtsichtsystem nach Anspruch 8,
**dadurch gekennzeichnet,**
**dass** die Datenverarbeitungseinheit (3) zur Ermittlung einer relevanten Bildinformation in Form bewegter und/oder unbewegter Objekte und/oder Kanten, insbesondere in Form von Fahrbahnrändern und/oder Fahrspurmarkierungen, ausgebildet ist.

10. Nachtsichtsystem nach Anspruch 8 oder 9,
**dadurch gekennzeichnet,**
**dass** die Datenverarbeitungseinheit (3) zur Verwendung eines dynamisch anpassbaren und/oder fahrerseitig einstellbaren Schwellwerts, insbesondere der Intensität und/oder des Kontrasts und/oder der Nachbarschaftsbeziehungen bestimmter Pixelregionen der Bilddaten, als Analyseparameter ausgebildet ist.

11. Nachtsichtsystem nach einem der Ansprüche 8 bis 10,
**dadurch gekennzeichnet,**
**dass** die Datenverarbeitungseinheit (3) zur Klassifikation der ermittelten relevanten Bildinformationen und/oder zur Darstellung mittels der Bildausgabeeinrichtung (5) derart ausgebildet ist, dass die ermittelten relevanten Bildinformationen zur optischen Hervorhebung aufhellbar und/oder einfärbbar sind.

12. Nachtsichtsystem nach einem der Ansprüche 8 bis 11,
**dadurch gekennzeichnet,**
**dass** die Datenverarbeitungseinheit (3) zur Darstellung des Nachtsichtbildes mittels der Bildausgabeeinrichtung (5) derart ausgebildet ist, dass nicht relevante Bildinformationen schwarzweiß, monochrom oder mit Falschfarben darstellbar sind.

13. Nachtsichtsystem nach einem der Ansprüche 8 bis 12,
**dadurch gekennzeichnet,**
**dass** die Datenverarbeitungseinheit (3) zur Darstellung des Nachtsichtbildes mittels der Bildausgabeeinrichtung (5) derart ausgebildet ist, dass die Farbgestaltung und/oder Helligkeit der Darstellung an die Umgebungsbedingungen, insbesondere die Umgebungshelligkeit und/oder die Außentemperatur und/oder den Luftdruck und/oder die Luftfeuchtigkeit, anpassbar sind.

14. Nachtsichtsystem nach einem der Ansprüche 8 bis 13,
**dadurch gekennzeichnet,**
**dass** die Datenverarbeitungseinheit (3) zur Darstellung des Nachtsichtbildes mittels der Bildausgabeeinrichtung (5) in Abhängigkeit von einer fahrerseitig ausgewählten Art und/oder Farbgebung der Hervorhebung ausgebildet ist.

15. Nachtsichtsystem nach einem der Ansprüche 8 bis 14,
**dadurch gekennzeichnet,**
**dass** die Bildaufnahmeeinrichtung (2) wenigstens eine Infrarot-Kamera umfasst, die Teil eines fahrzeugseitigen Ferninfrarot- oder Nahinfrarot-Systems ist.

16. Nachtsichtsystem nach einem der Ansprüche 8 bis 15,
**dadurch gekennzeichnet,**
**dass** die Bildausgabeeinrichtung (5) ein Head-Up-Display oder eine Bildprojektionseinrichtung oder ein Flüssigkristall-Display ist.
